# EUROPÄISCHE PATENTSCHRIFT

(11) **EP 0 917 695 B1**
(45) Veröffentlichungstag und Bekanntmachung des Hinweises auf die Patenterteilung: **17.05.2000**
(21) Anmeldenummer: 97928271.2
(22) Anmeldetag: 25.06.1997
(51) Int. Cl.: G08B 21/00, B60T 8/88

(54) **SCHALTUNGSANORDNUNG ZUR ANSTEUERUNG VON WARNSIGNALGEBERN**
CIRCUIT ARRANGEMENT FOR DRIVING WARNING SIGNAL GENERATORS
ENSEMBLE DE CIRCUITS SERVANT A COMMANDER DES GENERATEURS DE SIGNAUX AVERTISSEURS

(30) Priorität: 05.08.1996 DE 19631627
(43) Veröffentlichungstag der Anmeldung: 26.05.1999
(73) Patentinhaber: Continental Teves AG & Co. oHG, 60488 Frankfurt (DE)
(72) Erfinder: ENGELMANN, Mario, D-61449 Steinbach (DE); FEY, Wolfgang, D-65527 Niedernhausen (DE); ZINKE, Olaf, D-81669 München (DE)
(74) Vertreter: Blum, Klaus-Dieter
(86) Internationale Anmeldenummer: EP9703335
(87) Internationale Veröffentlichungsnummer: WO9806076

(56) Entgegenhaltungen:
- WO-A-92/17358
- DE-A- 1 926 665
- DE-A- 4 037 175
- DE-A- 4 310 530
- DE-B- 2 046 945
- US-A- 4 016 457

## Beschreibung

Die Erfindung bezieht sich auf eine Schaltungsanordnung zur Ansteuerung von aktiv und/oder passiv betriebenen Warnsignalgebern, die bei Ausfall der Elektronik-Versorgungsspannung ein Warnsignal hervorrufen.

Schaltungsanordnungen dieser Art werden beispielsweise für Kraftfahrzeuge, die mit elektronischen Regelungssystemen ausgerüstet sind, benötigt. Zu diesen Regelungssystemen gehören Antiblockiersysteme, Antriebsschlupfregelungen, Fahrstabilitätsregelungen usw.. Beim Auftreten eines Fehlers, wozu auch der Ausfall der Elektronik-Versorgungsspannung zählt, wird eine Warnlampe eingeschaltet oder ein anderes Warnsignal ausgelöst. Weil solche Fehlfunktion mit Gefahren einhergehen können, sollten die Schaltungsanordnungen derart ausgelegt werden, daß auch bei einem Defekt in dem Überwachungssystem selbst bzw. in der Warnlampen-Ansteuerung das Aufleuchten der Warnlampe sichergestellt ist.

Aus der DE 43 10 530 A1 ist bereits eine Schaltungsanordnung zur Warnlampenansteuerung bekannt, die eine selbstleitende Transistorschaltung enthält. Dadurch wird erreicht, daß beim Ausfall der Elektronik-Versorgungsspannung ein Stromfluß von der Versorgungsquelle der Warnlampe, über diese Warnlampe und über die selbstleitende Transistorschaltung zur Masse möglich wird. Das Aufleuchten der Warnlampe in einem solchen Fehlerfall setzt allerdings einen "passiven" Betrieb der Warnlampe voraus, nämlich ein Leiten des Warnlampen-Stromes über den Ansteuer-Anschluß und über die Endstufe der Warnlampen-Ansteuerung. Es gibt jedoch heutzutage auch "aktiv" betriebene Warnlampen, die aufleuchten, wenn kein Ansteuersignal vorliegt. Der Ausgang der Warnsignal-Ansteuerstufe muß folglich beim Ausfall der Ansteuer-Elektronik hochohmig werden; eine selbstleitende Transistorschaltung würde in diesem Fall das Aufleuchten der (aktiv betriebenen) Warnlampe verhindern.

Der Erfindung liegt nun die Aufgabe zugrunde, eine Schaltungsanordnung zur Ansteuerung von Warnlampen und anderen Warnsignalgebern zu entwickeln, an die sowohl aktive als auch passive (d.h. aktiv oder passiv betriebene) Warnsignalgeber angeschlossen werden können und die dennoch sicherstellt, daß bei Ausfall der Elektronik, insbesondere der Versorgungsspannung, die Warnlampe aufleuchtet bzw. ein Warnsignal ausgegeben wird.

Es hat sich gezeigt, daß diese Aufgabe durch eine Schaltungsanordnung der im Anspruch 1 beschriebenen Art gelöst werden kann, deren Besonderheit darin besteht, daß diese einen Schaltkreis mit individuellen Ansteuerstufen und Anschlüssen für die einzelnen Warnsignalgeber enthält und einen Adaptier-Anschluß (-Pin) besitzt, der bei Anschluß an Masse den Schaltkreis für die Ansteuerung von zwei passiv betriebenen Warnsignalgebern konfiguriert und der bei Anschluß an einen zur Masse führenden ohmschen Widerstand die Ansteuerung eines aktiv und eines passiv betriebenen Warnsignalgebers zuläßt; wenn der Anschluß-Pin offen bleibt, ist der Schaltkreis für die Ansteuerung von zwei aktiv betriebenen Warnsignalgebern geeignet.

Die erfindungsgemäße Schaltungsanordnung ist also für den wahlweisen Anschluß von zwei aktiv betriebenen, von zwei passiv betriebenen oder von einem aktiv und einem passiv betriebenen Warnsignalgeber geeignet. Über einen einzigen Anschluß-Pin, der lediglich gegen Masse kurzgeschlossen, über einen Widerstand an Masse angeschaltet oder offen gehalten werden muß, ist in einfachster Weise eine Anpassung an die Betriebsart der angeschlossenen Warnlampen bzw. Warnsignalgeber erforderlich.

Nach einem vorteilhaften Ausführungsbeispiel der Erfindung ist jeder Warnsignalgeber-Ansteuerstufe eine beim Einschalten aktive Einschalt-Steuerstufe zugeordnet, deren Funktionen ebenfalls von der Beschaltung des Adaptier-Pins abhängig sind und die beim Einschalten der Ansteuerschaltung sicherstellen, daß bis zum Abschluß einer Überprüfung des Systems die Warnsignalgeber angesteuert bzw. aktiviert werden; in der Anfangsphase leuchtet also die Warnlampe auf bzw. wird ein Warnsignal abgegeben.

Diese nur in der Anfangsphase wirksamen Einschalt-Steuerstufen, die weitgehend den Warnsignalgeber-Ansteuerstufen entsprechen, werden also ebenfalls durch die Beschaltung des Adaptier-Pins an die Betriebsart des angeschlossenen Warnsignalgebers - aktiv und/oder passiv - angepaßt.

Zweckmäßigerweise sind die Warnsignalgeber-Ansteuerstufen als selbstleitende Transistorschaltungen ausgebildet, die bei Ausfall der Versorgungsspannung einen von der Stromversorgung des Warnsignalgebers hervorgerufenen, über den Warnsignalgeber und über die Ansteuerstufe fließenden Strom, der die Warnlampe zum Aufleuchten bringt bzw. den Warnsignalgeber aktiviert, zulassen. Bei Anschluß des Adaptier-Pins an den zur Masse führenden Widerstand wird die Selbstleitfähigkeit einer der beiden Ansteuerstufen außer Funktion gesetzt. Bei offenem Adaptier-Pin wird die Selbstleitfähigkeit beider Stufen aufgehoben.

Es ist zweckmäßig, die einfachste Art der Konfiguration, nämlich das Offenlassen des Adaptier-Pins, für den in der Praxis besonders häufig vorkommenden Fall vorzusehen. In der Kraftfahrzeugtechnik wird heutzutage in den meisten Fällen mit aktiv betriebenen Warnlampen gearbeitet.

In den übrigen Unteransprüchen sind noch andere, besonders vorteilhafte Ausführungsbeispiele der Erfindung beschrieben.

Weitere Merkmale, Vorteile und Anwendungsmöglichkeiten der Erfindung gehen aus der folgenden Beschreibung von Einzelheiten anhand der beigefügten Abbildungen hervor.

Es zeigen:
- Fig. 1: die wesentlichen Elemente einer Schaltungsanordnung der erfindungsgemäßen Art,
- Fig. 2: symbolisch den prinzipiellen Aufbau einer aktiv und einer passiv betriebenen Warnlampe und
- Fig. 3: tabellarisch die Zustände der Warnlampentreiber bei verschiedenen Konfigurationen und Schaltzuständen.

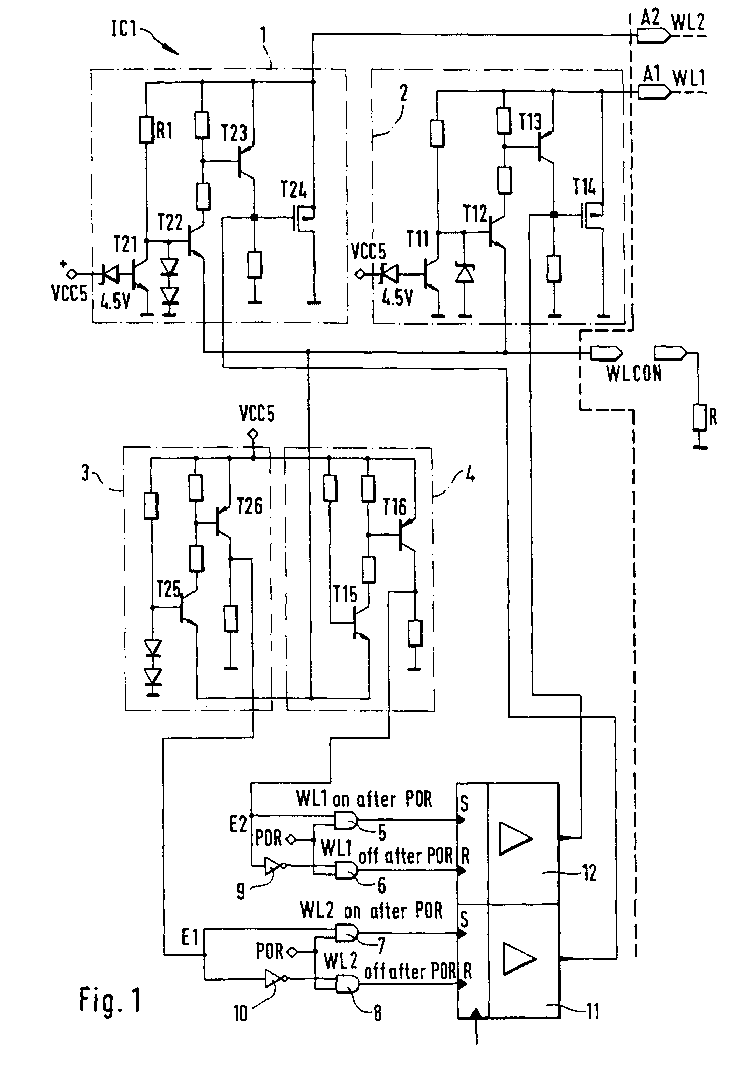

Ein Ausführungsbeispiel einer erfindungsgemäßen Schaltungsanordnung veranschaulicht Fig. 1. Die gestrichelte senkrechte Linie trennt die Anschlüsse A1(WL2),A2(WL1) und WLCON bzw. die Außenanschlüsse von den links in Fig. 1 dargestellten elektronischen Bauteilen, die in dem hier beschriebenen Ausführungsbeispiel Bestandteile einer integrierten Schaltung IC1 sind. Die Anschlüsse an die Versorgungsspannung der Elektronik sind mit VCC5 bezeichnet; es handelt sich um die Anschlüsse an eine stabilisierte 5V-Gleichspannungsquelle (+5 Volt).

Strichpunktiert eingerahmt sind in Fig. 1 zwei Ansteuerstufen 1,2, deren Ausgänge zu Anschlüssen A2( WL2) und A1( WL1) für jeweils eine Warnlampe oder einen anderen Warnsignalgeber führen. Die Anpassung dieser beiden Ansteuerstufen 1,2 an die Betriebsart der jeweils angeschlossenen Warnlampe WL1 oder WL2 erfolgt erfindungsgemäß durch Beschaltung des Anschlusses WLCON, der entweder offen bleibt, direkt an Masse angeschaltet oder mit einem zur Masse führenden ohmschen Widerstand R verbunden wird.

Zwei weitere Steuerstufen, nämlich die Einschalt-Steuerstufen 3 und 4 der Schaltung IC1, werden ebenfalls durch Beschaltung des Adaptier-Pins oder Adaptier-Anschlusses WLCON an die Betriebsart der angeschlossenen Warnlampen - aktiv oder passiv betrieben - angepaßt.

Im vorliegenden Ausführungsbeispiel ist der dargestellte Schaltkreis IC1 Bestandteil eines sogenannten "Power Control IC" (PCIC) für ein hydraulisches, elektronisch gesteuertes Blockierschutzregelungssystem (ABS). Der gesamte, nicht dargestellte Schaltkreis PCIC enthält 10 Ventiltreiber sowie die beiden in Fig. 1 wiedergegebenen Warnlampentreiber oder Ansteuerstufen 1,2. Über die Anschlüsse A1 (WL1) und A2 (WL2) sollen entweder zwei aktive (aktiv betriebene) Warnlampen oder zwei passive (passiv betriebene) Warnlampen oder eine aktive und eine passive Warnlampe angeschlossen werden.

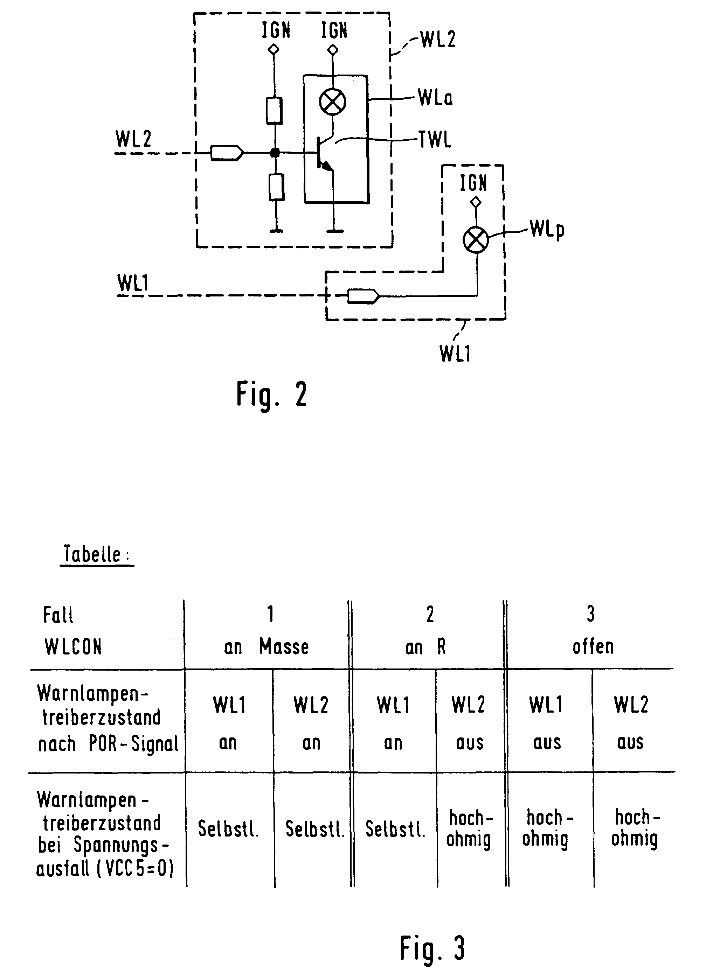

Fig. 2 veranschaulicht die Unterschiede zwischen aktiver und passiver (d.h. aktiv und passiv betriebener) Warnlampe. An A1/WL1 ist in diesem Beispiel eine passive Warnlampe WLp angeschlossen, nämlich eine herkömmliche Glühbirne, die aufleuchtet, wenn der Lampentreiber (bzw. die Endstufe T14 in Fig. 1) gegen Masse schaltet. Nach dem Einschalten der Spannungsversorgung des Reglers (z.B. eines ABS-Reglers), von dem in Fig. 1 nur IC1 gezeigt ist, soll die Lampe zunächst aufleuchten; der Lampentreiber, oder richtiger: die Endstufe T14 der Ansteuerstufe 2, muß auf Durchlaß geschaltet sein. Bei Ausfall der Spannungsversorgung am Regler stellt der Ausgangstreiber T14 durch "Selbstleitung" sicher, daß die passive Warnlampe WL1(WLp) aufleuchtet, wenn die Motorzündung Ignition (IGN) eingeschaltet ist. "IGN" ist hier, wie üblich, mit dem Pluspol der Fahrzeugbatterie verbunden. Folglich ruft die Batteriespannung einen Stromfluß durch die (passive) Warnlampe WL1(WLp) über den Transistor T14 der selbstleitenden Treiberstufe hervor. Ein Ausfall der Versorgungsspannung VCC5 wird also durch das Aufleuchten der (passiven) Warnlampe WL1 signalisiert.

An den zweiten Lampentreiber ist im dargestellten Beispiel über den Anschluß A2/WL2 eine aktiv betriebene Warnlampe Wla, die aus einer Glühlampe und einem Treibertransistor TWL besteht und die sich vorzugsweise im Armaturenbrett des Kraftfahrzeugs befindet,angeschlossen. Der Treibertransistor TWL wird über die Ansteuerstufe 1 im Schaltkreis IC1 gesteuert. Die Glühlampe der aktiven Warnlampe WLa leuchtet auf, wenn der Anschluß zum integrierten Schaltkreis IC1 unterbrochen ist. Um die aktive Warnlampe WLa auszuschalten, muß die Endstufe T24 (Fig. 1) der Ansteuerstufe 1 auf Durchlaß geschaltet bzw. die Steuerleitung oder Ausgangsleitung WL2 auf Masse gelegt werden. Bei hochohmigem T24 ist die aktive Warnlampe WL2 (Wla) an.

Zurück zu Fig. 1: Die Ansteuerstufen 1,2 und die Einschaltstufen 3,4 sind sehr ähnlich aufgebaut. Anstelle der Treibertransistoren T24, T14 in den Ansteuerstufen 1 und 2 ist in den Einschalt-Steuerstufen 3,4 eine Flip-Flop-Schaltung oder ein Warnlampenregister 11,12 angeschlossen.

Erfindungswesentlich ist die Konfigurierbarkeit der Warnlampenansteuerung bzw. des in Fig. 1 dargestellten Schaltkreises IC1 mit Hilfe eines einzigen Adaptier-Anschlusses oder Adaptier-Pins WLCON. Durch entsprechende Beschaltung dieses Adaptier-Pins wird es möglich,
(1) zwei passive Warnlampen (oder sonstige passive Warnsignalgeber),
(2) eine passive und eine aktive Warnlampe (bzw. Warnsignalgeber) oder
(3) zwei aktive Warnlampen anzuschließen.

Zur Anpassung an den Fall (1) wird der Adaptier-Pin WLCON kurzgeschlossen, d.h. auf Masse gelegt. Beide Treibertransistoren T24,T14 werden in diesem Fall, wenn die Versorgungsspannung VCC5 ausfällt, selbstleitend. Nach dem Einschalten der Zündung (IGN) wird über den Basiswiderstand R1 der Ansteuerstufe 1 der Transistor T22 aufgesteuert. Dadurch werden auch die Transistoren T23 und der Treibertransistor T24 eingeschaltet. Entsprechendes gilt für die Ansteuerstufe 2.

In der Einschalt-Steuerstufe 3 wird ebenfalls im Fall (1) der Transistor T26 leitend, so daß das positive Potential der Quelle VCC5 -reduziert um den Spannungsabfall über T26 - an den Eingang E1 des Gatters am Eingang des Flip-Flops oder Registers 11 gelangt. Entsprechendes gilt für die Potentiale in der Einschalt-Steuerstufe 4, für T16 und schließlich für das Potential am Eingang E2. An den Gate-Anschlüssen der Ausgangs-Treibertransistoren T24,T14 liegt folglich positives Potential, so daß diese Treiberstufen selbstleitend werden.

Wird dagegen - Fall (2) - das Anschalten einer aktiven und einer passiven Warnlampe verlangt, ist es erforderlich, den Adaptier-Pin WLCON über den ohmschen Widerstand R auf Masse zu legen. Der Spannungsabfall über diesem Adaptier-Widerstand R ändert nichts an dem zuvor beschriebenen Einschaltzustand der Transistoren in der Ansteuerstufe 2. Der Spannungsabfall über diesem Adaptier-Widerstand R, der als "Emitterwiderstand" des Transistors T22 der Ansteuerstufe 1 geschaltet ist, führt dagegen zur Sperrung der Transistoren T22 und T25 der Ansteuerstufe 1 und der Transistoren T25, T26 der Einschalt-Steuerstufe 3. Mit Hilfe von zwei in Serie geschalteten Dioden wird nämlich das Basispotential des Transistors T22 bzw. T25 auf einem relativ geringen, von der Durchlaßspannung der Dioden (siehe Fig.1) vorgegebenen Wert festgelegt, das Emitterpotential der Transistoren T22,T25 jedoch durch den Emitterwiderstand R angehoben. Der Treibertransistor T24 der Ansteuerstufe 1 verliert dadurch seine Selbstleitungsfähigkeit, so daß die aktive, an den Anschluß A2 angeschlossene Warnlampe aufleuchtet, wenn die Versorgungsspannung VCC5 der Elektronik ausfällt. Anderes gilt für den Treibertransistor T14, weshalb sich der Anschluß A1 weiterhin zum Anschließen einer passiv betriebenen Warnlampe WLp (siehe Fig. 2) eignet. Der Eingang E1 am Gatter des Flip-Flops 11 liegt in diesem Fall, weil T26 ebenfalls gesperrt ist, auf Massepotential.

Schließlich gibt es noch Fahrzeugtypen, bei denen an beide Anschlüsse A1, A2 eine aktive Warnlampe angeschaltet werden soll. In diesem Fall (3) bleibt der Adaptier-Pin WLCON offen. Bei Ausfall der Versorgungsspannung VCC5 ist kein Stromfluß über die Transistoren T22, T12, T25 und T15 der Stufen 1 bis 4 möglich. Die Transistoren sind folglich gesperrt; die Selbstleitungsfähigkeit der Ansteuerstufen 1,2 wird wird nicht aktiviert. Bei Ausfall der Elektronik-Versorgungsspannung VCC5 leuchten die aktiven Warnlampen auf.

Die Einschalt-Steuerstufen 3,4, deren Funktion bereits beschrieben wurde, werden nur während des Einschaltens der Spannungsversorgung der Elektronik bzw. des gesamten Power Control IC's benötigt. Die Beschaltung des Adaptier-Pins WLCON wirkt sich in prinzipiell gleicher Weise auf die Ansteuerstufen 1,3 und auf die Einschalt-Steuerstufen 3,4 aus.

Die Einschaltstufen 3,4 in Verbindung mit den Flip-Flops 11,12 stellen sicher, daß die an den "Pins" A1, A2 angeschlossenen, aktiven und /oder passiven Warnlampen in der Einschaltphase zunächst aufleuchten. Sobald der Spannungspegel der Spannungsversorgung VCC5 einen bestimmten Pegel erreicht hat, wird ein POR-Signal (Power on Reset-Signal) erzeugt. Dadurch wird über die UND-Gatter 5,6,7,8 und die vorgeschalteten Inverter 9,10 ein Stell- oder Rückstellbefehl (Set,Reset) am Eingang der Flip-Flops 11,12 erzeugt, der in der gewünschten Weise die EndstufenTransistoren T24, T14 - je nach Beschaltung des Adaptier-Pins WLCON - zunächst sperren oder auf Durchlaß schalten.

Die Funktion der Einschalt-Stufen 3,4 entspricht der Funktion der Ansteuerstufen 1,2, mit dem Unterschied, daß die Einschalt-Stufen 3,4 aus der Elektronik-Versorgungsspannung VCC5 und nicht aus der Fahrzeugbatterie über die Anschlüsse IGN, Lampe und WL1/A1, WL2/A2 versorgt werden. Die Transistoren T26,T16 der Einschalt-Steuerstufen 3,4 bestimmen das Potential an den Eingängen E1, E2 der Logikgatter am Eingang der Flip-Flops 11,12.

Das POR-Signal liegt in Form eines Pulssignales vor, daß beim Einschalten der Elektronik einmalig erzeugt wird. Über die UND-Gatter 5 bis 8 wird das POR-Signal mit dem von den Transistoren T26,T16 gelieferten Signal bzw. dem invertierten Signal - hervorgerufen durch die Inverterstufen 9,10 - logisch verknüpft.

In Fig. 3 sind die Zustände der Warnlampentreiber (insbesondere der Endstufentransistoren T24, T14) in Abhängigkeit von der Konfiguration bzw. der Beschaltung des Adaptier-Anschlusses WLCON wiedergegeben. Der untersten Zeile "Spannungsausfall" ist zu entnehmen, unter welchen Bedingungen "Selbstleitung" gegeben ist. In diesen Fällen ist der Anschluß WL1/WL2 für eine passiv betriebene Warnlampe, in anderen Fällen für eine aktiv betriebene Warnlampe geeignet.

## Patentansprüche

1. Schaltungsanordnung zur Ansteuerung von aktiv und/oder passiv betriebenen Warnsignalgebern, die bei Ausfall der Elektronik-Versorgungsspannung ein Warnsignal hervorruft, dadurch **gekennzeichnet**, daß diese einen (integrierten) Schaltkreis (IC1) mit individuellen Ansteuerstufen (1,2) und Anschlüssen (A1,A2) für die einzelnen Warnsignalgeber (WL1, WL2) enthält und einen Adaptier-Anschluß (WLCON) besitzt, der bei Anschluß an Masse den Schaltkreis für die Ansteuerung von zwei passiv betriebenen Warnsignalgebern (Wlp) konfiguriert, der bei Anschluß an einen zur Masse führenden ohmschen Widerstand einen Warnsignalgeber-Anschluß (A1) für die Ansteuerung eines aktiv betriebenen sowie einen Warnsignalgeber-Anschluß (A2) für den Anschluß eines passiv betriebenen Warnsignalgebers (Wla und Wlp) konfiguriert und der, wenn der Adaptier-Anschluß offenbleibt, den Schaltkreis (IC1) für die Ansteuerung von zwei aktiv betriebenen Warnsignalgebern (WLa) auslegt.

2. Schaltungsanordnung nach Anspruch 1, dadurch **gekennzeichnet**, daß jeder Warnsignalgeber-Ansteuerstufe (1,2) eine beim Einschalten des Schaltkreises aktive Einschalt-Steuerstufe (3,4) zugeordnet ist, deren Funktionen ebenfalls von der Beschaltung des Adaptier-Anschlusses (WLCON) abhängig sind und die beim Einschalten des Schaltkreises (IC1) sicherstellen, daß bis zum Abschluß einer Überprüfung des Systems und Anwachsen der Elektronik-Versorgungsspannung (VCC5) die Warnsignalgeber (WL1, WL2) angesteuert bzw. aktiviert werden.

3. Schaltungsanordnung nach Anspruch 2, dadurch **gekennzeichnet,** daß beim Einschalten der Warnsignalgeber-Ansteuerschaltung ein Stell- oder Rückstell-Befehl (POR) ausgegeben wird und daß die Einschalt-Steuerstufen (1,2) des Schaltkreises (IC1)
beim Auftreten des Stell- oder Rückstellbefehls durch Ansteuerung von Endstufen (T24,T14) der Warnsignalgeber-Ansteuerstufen (1,2) die Aktivierung der Warnsignalgeber während der Einschaltphase sicherstellen.

4. Schaltungsanordnung nach einem oder mehreren der Ansprüche 1 bis 3, dadurch **gekennzeichnet**, daß die Ansteuerstufe (1,2), an die ein passiv betriebener Warnsignalgeber angeschlossen ist, infolge der Beschaltung des Adaptier-Anschlusses (WLCON) als selbstleitende Transistorschaltung ausgelegt ist, die bei Ausfall der Elektronik-Versorgungsspannung (VCC5) einen von der Stromversorgung (IGN) des Warnsignalgebers hervorgerufenen, über den Warnsignalgeber (WL1,WL2) und über die zugehörige Ansteuerstufe (2) fließenden Strom zuläßt.

5. Schaltungsanordnung nach Anspruch 4, dadurch **gekennzeichnet**, daß beide Ansteuerstufen (1,2), wenn der Adaptier-Anschluß (WLCON) an Masse angeschlossen ist, selbstleitende Transistorschaltungen sind, die bei Ausfall der Elekronik-Versorgungsspannung (VCC5) einen von der Stromversorgung (IGN) der Warnsignalgeber (WL1,WL2) hervorgerufenen, über die Warnsignalgeber (WL1,WL2) und über die Ansteuerstufen (1,2) fließenden Strom zulassen.

6. Schaltungsanordnung nach einem oder mehreren der Ansprüche 1 bis 5, dadurch **gekennzeichnet**, daß bei Anschluß des Adaptier-Anschlusses (WLCON) an den zur Masse führenden Widerstand (R) eine Ansteuerstufe (2) selbstleitend wird und die Selbstleitfähigkeit der zweiten Ansteuerstufe(1) durch die Potentialanhebung infolge des Widerstandes (R) inaktiviert wird.

7. Schaltungsanordnung nach einem oder mehreren der Ansprüche 1 bis 6, dadurch **gekennzeichnet**, daß als Warnsignalgeber (WL1,WL2) aktiv und/oder passiv betriebene Warnlampen (Wla, Wlp) vorgesehen sind.

## Claims

1. A circuit configuration for actuating active-operated and/or passive-operated warning signal generators generating an alarm signal upon failure of the supply voltage of the electronic system,
characterized in that it comprises an (integrated) circuit (IC1) having individual actuating steps (1,2) and connections (A1, A2) for the individual warning signal generators (WL1, WL2), and further comprises an adapter connection (WLCON) which, when connected to ground, configures the circuit for the actuation of two passive-operated warning signal generators (Wlp) and, when connected to an ohmic resistance leading to ground, configures a warning signal generator connection (A1) for actuating an active-operated warning signal generator (Wla and Wlp) and a warning signal generator connection (A2) for connection of a passive-operated warning signal generator (Wla and Wlp), and which - once the adapter connection remains open - configures the circuit (IC1) for actuation of two active-operated warning signal generators (WLa).

2. A circuit configuration according to claim 1,
characterized in that associated with each actuating step (1,2) of the warning signal generator is an activating control step (3,4) active when activating the circuit, with the functions of the said control step (3,4) being also dependent on wiring the adapter connection (WLCON) and safeguarding during activation of the circuit (IC1) that the warning signal generators (WL1, WL2) are actuated or remain activated until the system has been checked and the supply voltage (VCC5) of the electronic system raised.

3. A circuit configuration according to claim 2,
characterized in that upon activation of the actuation circuit of the warning signal generator a set or reset command (POR) is generated, and in that the activating control steps (1,2) of the circuit (IC1), upon occurrence of the set or reset command, by actuation of final stages (T24, T14) of the actuating steps (1,2) of the warning signal generator ensure activation of the warning signal generator during the activating phase.

4. A circuit configuration according to any one or more of claims 1 to 3,
characterized in that the actuating step (1,2) connected to which is a passive-operated warning signal generator, as a result of wiring the adapter connection (WLCON), is designed in the form of a self-conductive transistor circuit which, upon failure of the supply voltage (VCC5) of the electronic system, permits a current induced by the power supply (IGN) of the warning signal generator to flow across the warning signal generator (WL1, WL2) and across the appertaining actuating step (2).

5. A circuit configuration according to claim 4,
characterized in that both actuating steps (1,2), upon connection of the adapter connection (WLCON) to ground, are self-conducting transistor circuits which, upon failure of the supply voltage (VCC5) of the electronic system permit a current induced by the power supply (IGN) of the warning signal generators (WL1, WL2) to flow across the warning signal generators (WL1, WL2) and across the actuating steps (1,2).

6. A circuit configuration according to any one or more of claims 1 through 5,
characterized in that, upon connection of the adapter connection (WLCON) to resistance (R) leading to ground, one control step (2) will become self-conductive while the self-conductance of the second actuating step (1) will be inactivated by the rise in potential as a result of resistance (R).

7. A circuit configuration according to any one or more of claims 1 to 6,
characterized in that the warning signal generators (WL1, WL2) are active-operated and/or passive-operated warning lamps (Wla, Wlp).

## Revendications

1. Montage pour la commande de générateurs de signaux d'avertissement, qui fonctionnent d'une manière active et/ou passive, et qui, lors de la défaillance de la tension d'alimentation du système électronique, produit un signal d'avertissement, caractérisé en ce que ce montage contient un circuit (intégré) (IC1) comportant des étages individuels de commande (1,2) et des bornes (A1,A2) pour les différents générateurs (WL1, WL2) de signaux d'avertissement et possède une borne d'adaptation (WLCON) qui, lors du raccordement à la masse, configure le circuit pour la commande de deux générateurs de signaux d'avertissement (W1p), qui fonctionnent de façon passive, et qui, lors du raccordement à une résistance ohmique reliée à la masse, configure une borne (A1) d'un générateur de signaux d'avertissement pour la commande d'un générateur de signaux d'avertissement (W1a) fonctionnant de façon passive, ainsi qu'une borne (A2) d'un générateur de signaux d'avertissement pour le raccordement d'un générateur de signaux d'avertissement (W1p) fonctionnant de façon passive, et qui, lorsque la borne d'adaptation reste ouverte, configure le circuit (IC1) pour la commande de deux générateurs de signaux d'avertissement (WLa) qui fonctionnent de façon active.

2. Montage selon la revendication 1, caractérisé en ce qu'aux étages de commande (1,2) des générateurs de signaux d'avertissement sont associés des étages respectifs de commande de branchement (3,4), qui sont actifs lors du branchement du circuit et dont les fonctions dépendent également du câblage de la borne d'adaptation (WLCON) et qui garantissent, lors du branchement du circuit (IC1), que jusqu'à la fin d'un contrôle du système et jusqu'à la croissance de la tension d'alimentation (VCC5) du système électronique, les générateurs de signaux d'avertissement (WL1,WL2) sont commandés ou activés.

3. Montage selon la revendication 2, caractérisé en ce que lors du branchement du circuit de commande des générateurs de signaux d'avertissement, une instruction de positionnement ou de remise à l'état initial (POR) est délivrée, et en ce que lors de l'apparition de l'instruction de positionnement ou de remise à l'état initial, les étages de commande de branchement (1,2) du circuit (IC1) garantissent l'activation des générateurs de signaux d'avertissement pendant la phase de branchement, au moyen de la commande d'étages finals (T24,T14) des étages de commande (1,2) des générateurs de signaux d'avertissement.

4. Montage selon une ou plusieurs des revendications 1 à 3, caractérisé en ce que l'étage de commande (1, 2), auquel est raccordé un générateur de signaux d'avertissement fonctionnant de façon passive, est conçu, en fonction du câblage de la borne d'adaptation (WLCON), en tant que circuit à transistor autoconducteur, qui, dans le cas de la défaillance de la tension d'alimentation (VCC5) du système électronique, autorise le passage d'un courant produit par l'alimentation en courant (IGN) du générateur de signaux d'avertissement et circulant dans le générateur de signaux d'avertissement (WL1,WL2) et dans l'étage de commande associé (2).

5. Montage selon la revendication 4, caractérisé en ce que, lorsque la borne d'adaptation (WLCON) est raccordée à la masse, les deux étages de commande (1,2) sont des circuits à transistors autoconducteurs, qui, dans le cas d'une défaillance de la tension d'alimentation (VCC5) du système électronique, autorisent le passage d'un courant qui est provoqué par l'alimentation en courant (IGN) et circule dans les générateurs de signaux d'avertissement (WL1, WL2) et dans les étages de commande (1,2).

6. Montage selon l'une ou plusieurs des revendications 1 à 5, caractérisé en ce que lors du raccordement de la borne d'adaptation (WLCON) à la résistance (R) reliée à la masse, un étage de commande (2) devient autoconducteur et la capacité d'autoconduction du second étage de commande (1) est désactivée par l'accroissement de potentiel en raison de la résistance (R).

7. Montage selon une ou plusieurs des revendications 1 à 6, caractérisé en ce qu'il est prévu comme générateurs de signaux d'avertissement (WL1, WL2), des lampes témmoins (W1a, W1p) fonctionnant d'une manière active ou passive.
